# EUROPEAN PATENT APPLICATION

(11) **EP 4 560 804 A1**
(43) Date of publication of application: **28.05.2025**
(21) Application number: 24214602.5
(22) Date of filing: 21.11.2024
(51) Int. Cl.: H01M 50/207, H01M 50/242, H01M 50/284, H01M 50/204, H01M 50/287

(54) **BATTERY PACK AND ELECTRIC DEVICE**

(30) Priority: 24.11.2023 CN 202311587368
(71) Applicant: Xiamen Ampack Technology Limited, Xiamen City, Fujian Province, 361000 (CN)
(72) Inventor: LI, Kunlong, Xiamen City, Fujian Province, People s Republic of China, 361000 (CN); WANG, Pengfei, Xiamen City, Fujian Province, People s Republic of China, 361000 (CN); NONG, Wenbin, Xiamen City, Fujian Province, People s Republic of China, 361000 (CN); LI, Mei, Xiamen City, Fujian Province, People s Republic of China, 361000 (CN)
(74) Representative: Icosa

(57) **Abstract**

A battery pack (100) includes a shell (10a), a cell assembly (20), a front cover (10b), and an elastic member (30). The cell assembly (20) is disposed in the shell (10a). The front cover (10b) is connected to the shell (10a). The elastic member (30) and the cell assembly (20) are arranged along the first direction (X). along the first direction (X), one side of the elastic member (30) is connected to the shell (10a), and another side of the elastic member (30) is connected to the cell assembly (20). The shell (10a) includes a bottom wall, and the bottom wall (12) supports the cell assembly (20). The bottom wall (12) is provided with a first extension portion (121), the front cover (10b) is provided with a first connecting wall (101b), the first extension portion (121) is connected to the first connecting wall (101b), and the elastic member (30) abuts against the first extension portion (121).

## Description

### TECHNICAL FIELD

This application relates to the field of energy storage technologies, and in particular, to a battery pack and an electric device.

### BACKGROUND

Currently, battery packs are widely used in fields such as drones, electric vehicles, and intelligent energy storage devices. Battery packs may have gaps that allow dust and other impurities to enter, affecting the use of the battery packs.

### SUMMARY

In view of this, there is a need to provide a battery pack and an electric device that can reduce gaps and reduce the entry of dust and other impurities into the battery pack.

The embodiments of this application provide a battery pack, which includes a shell, a cell assembly, a front cover, and an elastic member. The cell assembly is disposed in the shell. The front cover is connected to the shell. The elastic member and the cell assembly are arranged along the first direction. Along the first direction, one side of the elastic member is connected to the shell, and another side of the elastic member is connected to the cell assembly. The shell includes a bottom wall, and the bottom wall supports the cell assembly. The bottom wall is provided with a first extension portion, the front cover is provided with a first connecting wall, the first extension portion is connected to the first connecting wall, and the elastic member abuts against the first extension portion. In this application, the elastic member abuts against the first extension portion, so that a force exerted by the elastic member causes the bottom wall to move closer to the first connecting wall, reducing a gap between the bottom wall and the first connecting wall. This reduces the entry of dust and other impurities into the battery pack, thereby reducing the impact of dust and other impurities on the use of the battery pack.

In one or more of the foregoing optional embodiments, the first extension portion includes a first extension connection portion and a first bent portion. The first extension connection portion is connected to the first connecting wall. The elastic member abuts against the first bent portion, which is conducive to increasing the strength of connection between the elastic member and the shell and reducing a gap between the bottom wall and the first connecting wall.

In one or more of the foregoing optional embodiments, the shell includes a top wall. The top wall and the bottom wall are arranged along a second direction, the top wall is provided with a second extension portion, and the elastic member abuts against the second extension portion. The front cover is provided with a second connecting wall, and the second extension portion is connected to the second connecting wall. The first directionis perpendicular to the second direction.

In one or more of the foregoing optional embodiments, the second extension portion includes a second extension connection portion and a second bent portion. The second extension connection portion is connected to the second connecting wall, and the elastic member abuts against the second bent portion, which is conducive to increasing the strength of connection between the elastic member and the shell and reducing a gap between the top wall and the second connecting wall.

In one or more of the foregoing optional embodiments, the elastic member includes a base portion, a buffer portion, and a connection portion, where the base portion is connected to the cell assembly, and the buffer portion connects the connection portion and the base portion. The connection portion is fixed to the shell.

In one or more of the foregoing optional embodiments, the buffer portion includes a first buffer portion, and the first buffer portion is connected to one side of the base portion.

In one or more of the foregoing optional embodiments, the buffer portion includes a first buffer portion and a second buffer portion, along the second direction, the first buffer portion and the second buffer portion are oppositely arranged, the first buffer portion is connected to one side of the base portion, and the second buffer portion is connected to another side of the base portion.

In one or more of the foregoing optional embodiments, the connection portion includes a first connection portion, the elastic member includes a third bent portion, and the third bent portion abuts against the second bent portion, which is conducive to increasing the strength of connection between the elastic member and the shell. This also helps the elastic member to exert pressure on the top wall, causing the top wall to move closer to the second connecting wall, thereby reducing the gap between the top wall and the second connecting wall.

In one or more of the foregoing optional embodiments, the connection portion includes a second connection portion, and the first connection portion and the second connection portion are oppositely arranged along the second direction. The elastic member includes a fourth bent portion, and the fourth bent portion abuts against the first bent portion, which is conducive to increasing the strength of connection between the elastic member and the shell. This also helps the elastic member to exert pressure on the bottom wall, causing the bottom wall to move closer to the first connecting wall, thereby reducing a gap between the bottom wall and the first connecting wall.

In one or more of the foregoing optional embodiments, the bottom wall is provided with a first fixing portion, and the second connection portion is fixed to the first fixing portion. In the first direction, a projection of the first fixing portion overlaps with a projection of the second connection portion.

In one or more of the foregoing optional embodiments, the top wall is provided with a second fixing portion, and the first connection portion is fixed to the second fixing portion. In the first direction, a projection of the second fixing portion overlaps with a projection of the first connection portion.

In one or more of the foregoing optional embodiments, the shell includes a first side wall, the first side wall connects the bottom wall and the top wall, and the first side wall is fixedly connected to the front cover. The first side wall is provided with a third fixing portion, and the first connection portion and the second connection portion are fixed to the third fixing portion, which helps the elastic member to be evenly stressed and uniformly deformed.

In one or more of the foregoing optional embodiments, the shell includes a second side wall, and the second side wall is fixedly connected to the front cover. The second side wall connects the top wall and the bottom wall, the second side wall is provided with a fourth fixing portion, and the first connection portion and the second connection portion are fixed to the fourth fixing portion, which helps the elastic member to be evenly stressed and uniformly deformed.

In one or more of the foregoing optional embodiments, the first extension portion and the second extension portion are located within the front cover, enabling the front cover to limit the second extension portion and the first extension portion, which facilitates the connection between the front cover and the shell.

In one or more of the foregoing optional embodiments, the first extension portion and the first fixing portion are arranged along the third direction, and the first fixing portion is disposed between adjacent first extension portions, which helps to block gaps and helps the elastic member to be evenly stressed and uniformly deformed.

In one or more of the foregoing optional embodiments, the second extension portion and the second fixing portion are arranged along the third direction, and the second fixing portion is disposed between adjacent second extension portions, which helps to block gaps and helps the elastic member to be evenly stressed and uniformly deformed.

In one or more of the foregoing optional embodiments, the shell includes a back wall, where the back wall connects the top wall and the bottom wall. Along the first direction, the cell assembly is located between the elastic member and the back wall, and stiffness of the elastic member is less than stiffness of the back wall. When the cell assembly swells, the elastic member deforms before the back wall, providing a swelling space for the cell assembly.

In one or more of the foregoing optional embodiments, the cell assembly includes a cell unit. The cell unit includes a cell, where the cell includes a cell housing, an electrode assembly, and electrode terminals. The cell housing includes a body portion, the electrode assembly is disposed in the body portion, and the electrode terminal is connected to the electrode assembly and extends out of the cell housing. The top wall is provided with two first limiting portions, where the two first limiting portions are arranged along the third direction. The body portion of each cell unit is disposed between the two first limiting portions. The two first limiting portions guide the movement of the cell assembly.

In one or more of the foregoing optional embodiments, the bottom wall is provided with two first limiting portions, where the two first limiting portions are arranged along the third direction. The body portion of each cell unit is disposed between the two first limiting portions. The two first limiting portions guide the movement of the cell assembly.

In one or more of the foregoing optional embodiments, the battery pack includes a first buffer member, where the first buffer member is disposed between the base portion and the first cell unit. Hardness of the first buffer member is less than hardness of the base portion, reducing damage to the first cell unit caused by the base portion.

In one or more of the foregoing optional embodiments, the battery pack includes a second buffer member, where the second buffer member is disposed between the second cell unit and the back wall. Hardness of the second buffer member is less than hardness of the back wall, reducing damage to the second cell unit caused by the back wall.

In one or more of the foregoing optional embodiments, the battery pack includes a first conductive member. Along the second direction, there is a first gap provided between the base portion and the shell. One end of the first conductive member is connected to the cell assembly, and another end passes through the first gap.

In one or more of the foregoing optional embodiments, the first conductive member is configured to be able to move with the elastic member, reducing the pulling force on the first conductive member, lowering the risk of the first conductive member being pulled apart, and enhancing the safety of the battery pack.

In one or more of the foregoing optional embodiments, the battery pack includes a second conductive member. There is a second gap provided between the base portion and the shell. One end of the second conductive member is connected to the cell assembly, and another end of the second conductive member passes through the second gap.

In one or more of the foregoing optional embodiments, the second conductive member is separated from the elastic member, reducing the pulling force on the second conductive member, lowering the risk of the second conductive member being pulled apart, and enhancing the safety of the battery pack.

In one or more of the foregoing optional embodiments, the connection portion is provided with a folded edge, where the folded edge is formed by folding one side of the connection portion away from the buffer portion in the second direction. Along the first direction, the folded edge is located between the connection portion and the base portion. The folded edge can reduce the risk of the connection portion cutting through the wire harness.

In one or more of the foregoing optional embodiments, along the first direction, a projection of the folded edge spaced apart from a projection of the buffer portion, reducing the impact on a deformation region of the buffer portion.

Some embodiments of this application provide an electric device, including the battery pack according to any of the foregoing embodiments.

### BRIEF DESCRIPTION OF DRAWINGS

FIG. 1 is a schematic structural diagram of a battery pack in some embodiments.
FIG. 2 is a schematic exploded view of a battery pack in some embodiments.
FIG. 3 is a partial schematic structural diagram of a battery pack in some embodiments.
FIG. 4 is a partial schematic structural diagram of a battery pack in some embodiments.
FIG. 5 is an enlarged schematic diagram of a partial structure of the battery pack in FIG. 4.
FIG. 6 is an enlarged schematic diagram of a partial structure of the battery pack in FIG. 4.
FIG. 7 is a schematic structural diagram of part of a shell and an elastic member in some embodiments.
FIG. 8 is a schematic structural diagram of an elastic member in some embodiments.
FIG. 9 is a schematic structural diagram of a top wall in some embodiments.
FIG. 10 is a schematic structural diagram of a top wall from another perspective in some embodiments.
FIG. 11 is an enlarged schematic diagram of part of the top wall in FIG. 10.
FIG. 12 is a schematic structural diagram of part of a shell in some embodiments.
FIG. 13 is a schematic structural diagram of a bottom wall in some embodiments.
FIG. 14 is an enlarged schematic diagram of part of the shell in FIG. 13.
FIG. 15 is a partial schematic structural diagram of a battery pack in some embodiments.
FIG. 16 is a schematic structural diagram of a front cover and a circuit board in some embodiments.
FIG. 17 is a schematic structural diagram of a circuit board in some embodiments.
FIG. 18 is a schematic structural diagram of a circuit board from another perspective in some embodiments.
FIG. 19 is a schematic structural diagram of a circuit board and a shell in some embodiments.
FIG. 20 is a partial schematic structural diagram of a battery pack in some embodiments.
FIG. 21 is a schematic structural diagram of a cell in some embodiments.
FIG. 22 is a schematic exploded view of the cell in FIG. 21.
FIG. 23 is a schematic structural diagram of a cell unit in some embodiments.
FIG. 24 is a schematic structural diagram of a cell unit from another perspective in some embodiments.
FIG. 25 is a schematic structural diagram of a cell unit from still another perspective in some embodiments.
FIG. 26 is a schematic structural diagram of part of a cell unit in some embodiments.
FIG. 27 is a schematic structural diagram of part of a cell unit in some embodiments.
FIG. 28 is a schematic structural diagram of a cell unit from yet another perspective in some embodiments.
FIG. 29 is a schematic structural diagram of an electric device in some embodiments.

**Reference signs of main components:**

| | |
|---|---|
| Battery pack | 100 |
| Shell | 10 |
| Shell | 10a |
| Front cover | 10b |
| First connecting wall | 101b |
| Second connecting wall | 102b |
| Second hole | 103b |
| Third connecting wall | 104b |
| Fourth connecting wall | 105b |
| Top wall | 11 |
| Second extension portion | 111 |
| First hole | 1111 |
| Second bent portion | 112 |
| Second extension connection portion | 113 |
| Second fixing portion | 11a |
| Second limiting portion | 11b |
| Bottom wall | 12 |
| First extension portion | 121 |
| First bent portion | 122 |
| First extension connection portion | 123 |
| First fixing portion | 12a |
| First limiting portion | 12b |
| First side wall | 13 |
| First fixing member | 131 |
| Third fixing portion | 13a |
| Second side wall | 14 |
| Fourth fixing portion | 14a |
| Second fixing member | 141 |
| Back wall | 15 |
| Cover | 16 |
| Cell assembly | 20 |
| Cell unit | 20a |
| First cell unit | 201 |
| Second cell unit | 202 |
| Cell | 21 |
| Cell housing | 21a |
| Body portion | 211 |
| First wall | 211c |
| Second wall | 211d |
| First housing | 2111 |
| First concave portion | 2111a |
| Second housing | 2112 |
| Second concave portion | 2112a |
| First extension side | 2113 |
| Second extension side | 2114 |
| Sealing portion | 212 |
| First sealing portion | 212a |
| First sealing connection portion | 2121 |
| First sealing bent portion | 2122 |
| Second sealing portion | 212b |
| Electrode assembly | 21b |
| Electrode terminal | 21c |
| Bracket | 22 |
| First bracket | 22a |
| Second bracket | 22b |
| First portion | 221 |
| First side portion | 222 |
| First side extension portion | 224 |
| Second portion | 226 |
| Protrusion portion | 227 |
| Accommodating groove | 227a |
| Notch | 228 |
| Elastic member | 30 |
| First gap | 301 |
| Second gap | 302 |
| Base portion | 31 |
| Buffer portion | 32 |
| First buffer portion | 321 |
| First segment | 321a |
| Second segment | 321b |
| Second buffer portion | 322 |
| Third segment | 322a |
| Fourth segment | 322b |
| Connection portion | 33 |
| First connection portion | 331 |
| Second connection portion | 332 |
| Folded edge | 333 |
| Third bent portion | 34 |
| Fourth bent portion | 35 |
| Circuit board | 40 |
| First component | 41 |
| First conductive member | 50 |
| Second conductive member | 60 |
| Sampling member | 70 |
| Fastener | 101 |
| First connecting end | 102 |
| Second connecting end | 103 |
| Wire | 104 |
| First insulating strip | 110 |
| First buffer member | 120 |
| Second buffer member | 130 |
| Electric device | 200 |
| First direction | X |
| Second direction | Y |
| Third direction | Z |

This application will be further described with reference to the accompanying drawings in some following specific embodiments.

### DETAILED DESCRIPTION OF EMBODIMENTS

The following describes the technical solutions in embodiments of this application with reference to the accompanying drawings in the embodiments of this application. Apparently, some described embodiments are only some rather than all of some embodiments of this application.

It should be noted that when one component is assumed as being "connected to" another component, it may be connected to the another component directly or with a component possibly present therebetween. When a component is deemed as being "provided" or "disposed" on another component, it may be directly provided on the another component, or there may be a component provided in between.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "and/or" used herein includes any and all combinations of one or more associated items listed.

It should be understood that, considering factors of actual manufacturing tolerances, the term "vertical" in the technical solution of this application is used to describe the ideal state between two components. In actual production or use, an approximation of this perpendicular state can exist between two parts. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension directionis a straight line or a plane.

Unless otherwise defined, all technical and scientific terms used herein shall have the same meanings as commonly understood by those skilled in the art to which this application pertains. The terms used herein in the specification of this application are for description of specific embodiments only without any intention to limit this application.

The terms "left," "right," "top," "bottom," "front," "back," and other similar expressions used herein are for illustrative purposes only and are not intended to limit the scope of this application.

Unless otherwise defined, the term "a plurality of" in the specification specifically indicates that there are two or more components when used for describing the number of components.

"In a first direction X" includes along the first direction X and along a direction opposite to the first direction X. "In a second directionY" includes along the second directionY and along a direction opposite to the second direction Y. "In a third direction Z" includes along the third direction Z and along a direction opposite to the third direction Z.

For the sake of convenience in description, some electrode terminals are not shown in a bent state in the accompanying drawings.

The embodiments of this application provide a battery pack, including a shell, a cell assembly, a front cover, and an elastic member. The cell assembly is disposed in the shell. The front cover is connected to the shell. The elastic member and the cell assembly are arranged along the first direction, along the first direction, one side of the elastic member is connected to the shell, and another side of the elastic member is connected to the cell assembly. The shell includes a bottom wall, and the bottom wall supports the cell assembly. The bottom wall is provided with a first extension portion, the front cover is provided with a first connecting wall, the first extension portion is connected to the first connecting wall, and the elastic member abuts against the first extension portion. In this application, the elastic member abuts against the first extension portion, so that a force exerted by the elastic member causes the bottom wall to move closer to the first connecting wall, reducing a gap between the bottom wall and the first connecting wall. This reduces the entry of dust and other impurities into the battery pack, thereby reducing the impact of dust and other impurities on the use of the battery pack.

The following describes in detail some embodiments of this application with reference to the accompanying drawings. In absence of conflicts, some following embodiments and features in some embodiments may be combined.

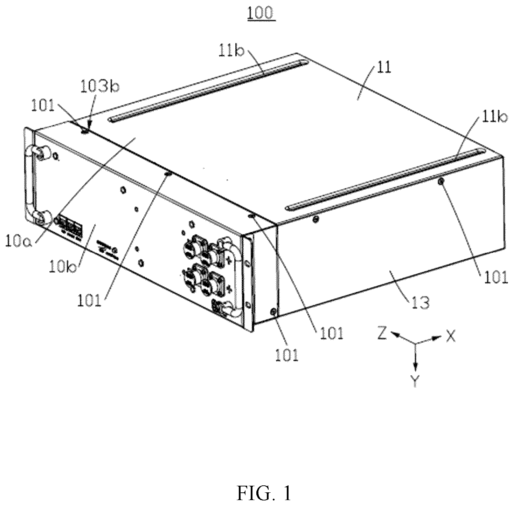

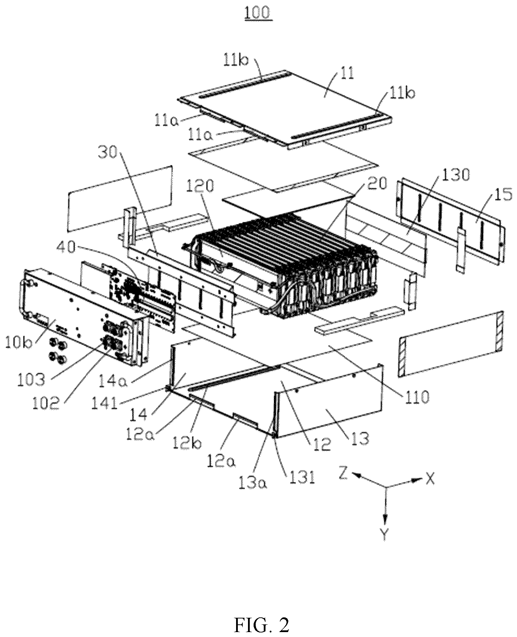

Referring to FIGs. 1 and 2, an embodiment of this application provides a battery pack 100, including a shell 10a, a cell assembly 20, and a front cover 10b, where the cell assembly 20 is disposed in the shell 10a, and the front cover 10b is connected to the shell 10a.

In some embodiments, the battery pack 100 includes an elastic member 30, and the elastic member 30 and the cell assembly 20 are arranged along a first direction X. along the first direction X, one side of the elastic member 30 is connected to the shell 10a, and another side of the elastic member 30 is connected to the cell assembly 20.

In some embodiments, the elastic member 30 is disposed in the shell 10a, which facilitates the disassembly and maintenance of the battery pack 100.

In some embodiments, the elastic member 30 is configured to apply pressure to the cell assembly 20 and provide a swelling space for the cell assembly 20.

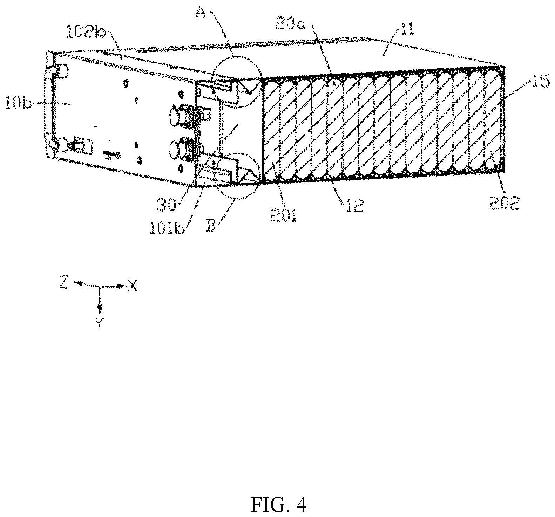

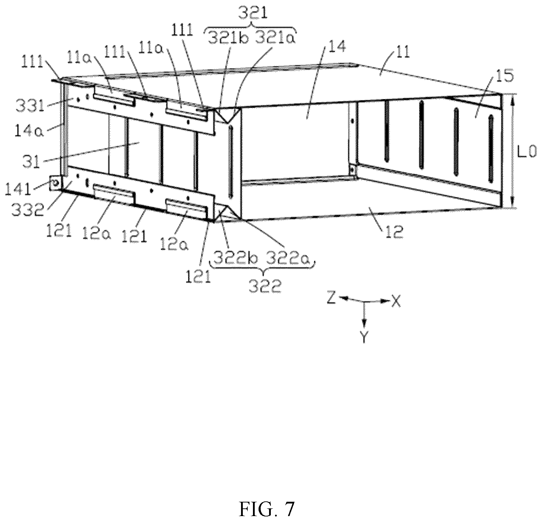

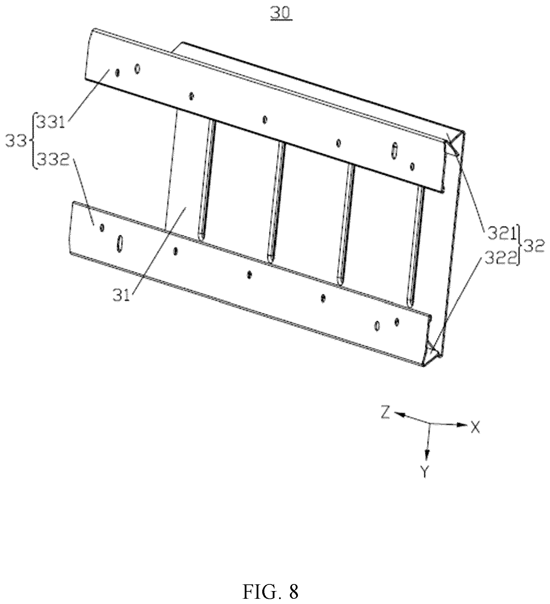

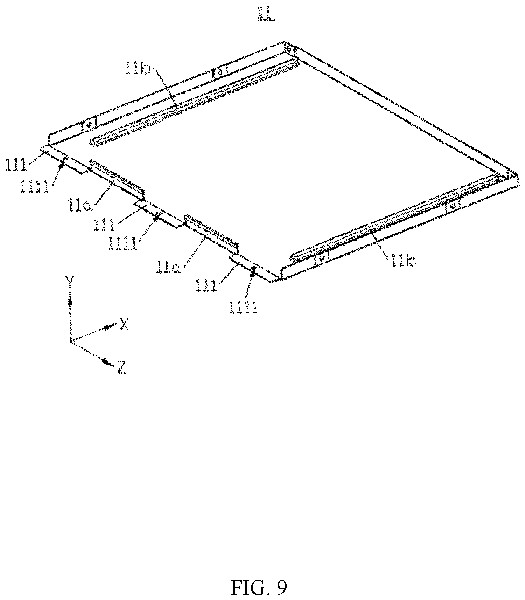

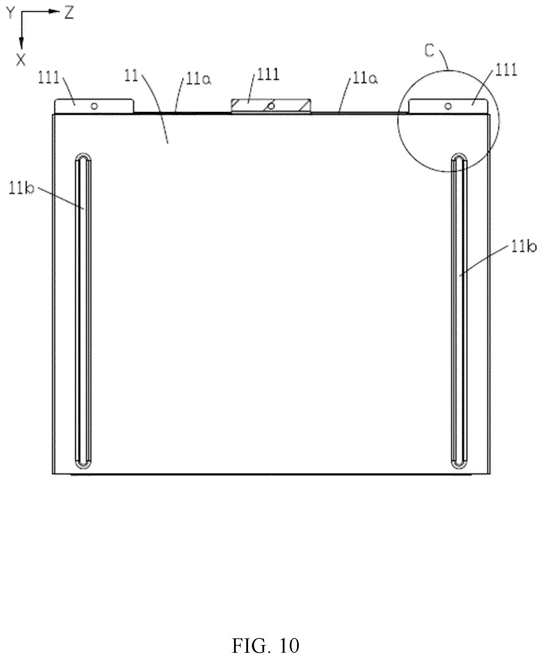

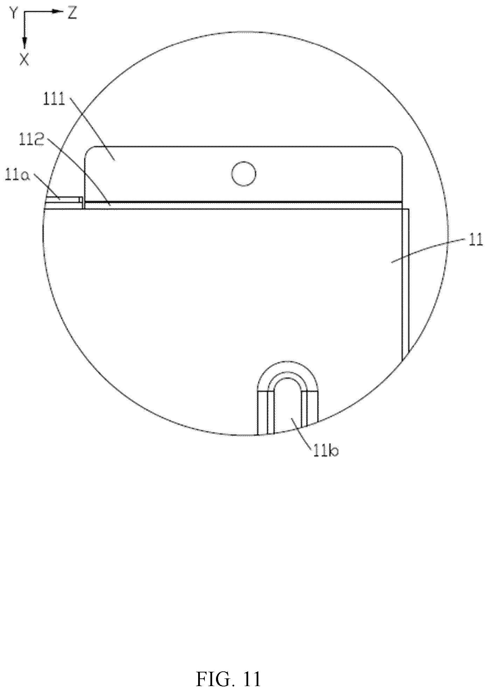

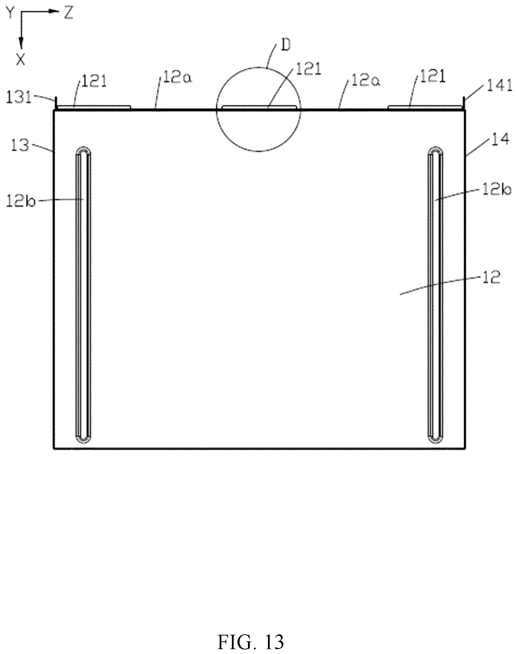

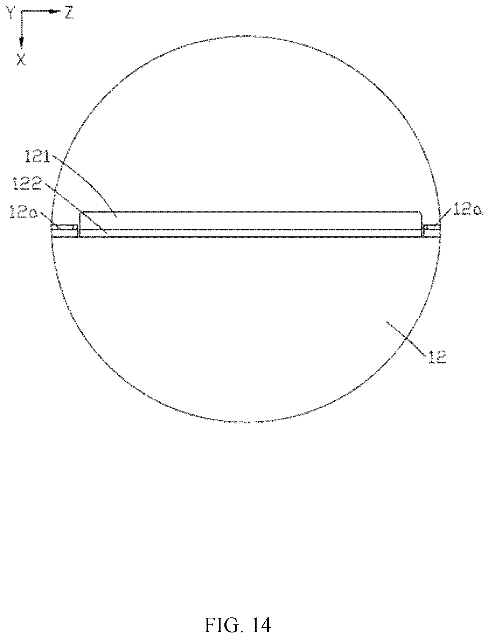

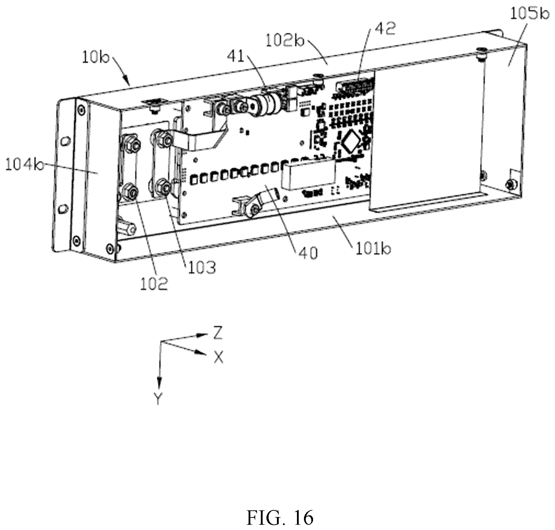

Referring to FIGs. 2 to 16, in some embodiments, the shell 10a includes a top wall 11, and the top wall 11 is connected to the front cover 10b.

In some embodiments, the shell 10a includes a bottom wall 12, and the bottom wall 12 supports the cell assembly 20. The top wall 11 and the bottom wall 12 are arranged along a second directionY, the first direction X is perpendicular to the second directionY
In some embodiments, the bottom wall 12 is provided with a first extension portion 121, and the first extension portion 121 is connected to the front cover 10b.

In some embodiments, the first extension portion 121 and the bottom wall 12 are of an integrally formed structure, for example, integrally formed by an injection molding process, or by bending or stamping a metal plate.

In some embodiments, the first extension portion 121 may be fixed to the bottom wall 12 in another way, including but not limited to welding, bonding, and so on.

In some embodiments, the front cover 10b is provided with a first connecting wall 101b, the first extension portion 121 is connected to the first connecting wall 101b, and the elastic member 30 abuts against the first extension portion 121. In this application, the elastic member 30 abuts against the first extension portion 121, so that a force exerted by the elastic member 30 causes the bottom wall 12 to move closer to the first connecting wall 101b, reducing a gap between the bottom wall 12 and the first connecting wall 101b. This reduces the entry of dust and other impurities into the battery pack 100, thereby reducing the impact of dust and other impurities on the use of the battery pack 100.

In some embodiments, the first extension portion 121 is connected to an inner surface of the first connecting wall 101b, which can block part of the gap, further reducing the entry of dust and other impurities into the battery pack 100.

In some embodiments, the first extension portion 121 is directly connected to the inner surface of the first connecting wall 101b, where "directly connected" means that the first extension portion 121 and the first connecting wall 101b are directly connected without other components in between.

In some embodiments, the top wall 11 is provided with a second extension portion 111, the front cover 10b is provided with a second connecting wall 102b, the second extension portion 111 is connected to the second connecting wall 102b, and the elastic member 30 abuts against the second extension portion 111. When the elastic member 30 abuts against the second extension portion 111, the force exerted by the elastic member 30 moves the top wall 11 closer to the second connecting wall 102b, reducing a gap between the top wall 11 and the second connecting wall 102b, thereby reducing the entry of dust and other impurities into the battery pack 100, and reducing the impact of dust and other impurities on the usage of the battery pack 100.

In some embodiments, the second extension portion 111 is fixed to the second connecting wall 102b, which can further reduce the gap between the top wall 11 and the second connecting wall 102b, thereby reducing the entry of dust and other impurities into the battery pack 100.

In some embodiments, the second extension portion 111 and the top wall 11 are of an integrally formed structure, for example, integrally formed by an injection molding process, or by bending or stamping a metal plate.

In some embodiments, the second extension portion 111 may be fixed to the top wall 11 in another way, including but not limited to welding, bonding, and so on.

In some embodiments, the battery pack 100 includes a fastener 101, the second extension portion 111 is provided with a first hole 1111, the second connecting wall 102b is provided with a second hole 103b, and the fastener 101 is disposed in the first hole 1111 and the second hole 103b, so that the second extension portion 111 is fastened to the second connecting wall 102b. Optionally, the fastener 101 includes a screw.

In some embodiments, the second extension portion 111 is connected to an inner surface of the second connecting wall 102b, which can block part of the gap, further reducing the entry of dust and other impurities into the battery pack 100.

In some embodiments, the second extension portion 111 is fastened to the second connecting wall 102b, and the fastening method includes but is not limited to fastener fixing, welding, bonding, and so on.

In some embodiments, the second extension portion 111 and the first extension portion 121 are located in the front cover 10b, enabling the front cover 10b to limit the second extension portion 111 and the first extension portion 121, which facilitates the connection between the shell 10a and the front cover 10b.

In some embodiments, the first extension portion 121 includes a first bent portion 122, the first bent portion 122 is connected to the bottom wall 12, and the elastic member 30 abuts against the first bent portion 122, which is conducive to increasing the strength of connection between the elastic member 30 and the shell 10a, thereby reducing the gap between the bottom wall 12 and the first connecting wall 101b.

In some embodiments, the first extension portion 121 includes a first extension connection portion 123, the first extension connection portion 123 is connected to the first bent portion 122, and the first extension connection portion 123 is connected to the first connecting wall 101b.

In some embodiments, the first extension connection portion 123 and the first bent portion 122 are integrally formed.

In some embodiments, the second extension portion 111 includes a second bent portion 112, the second bent portion 112 is connected to the top wall 11, and the elastic member 30 abuts against the second bent portion 112, which is conducive to increasing the strength of connection between the elastic member 30 and the shell 10a, thereby reducing the gap between the top wall 11 and the second connecting wall 102b.

In some embodiments, the second extension portion 111 includes a second extension connection portion 113, the second extension connection portion 113 is connected to the second bent portion 112, and the second extension connection portion 113 is connected to the second connecting wall 102b.

In some embodiments, the second extension connection portion 113 and the second bent portion 112 are integrally formed.

In some embodiments, along the first direction X, a length L1 of the first extension connection portion 123 is less than a length L2 of the second extension connection portion 113, which facilitates the cell assembly 20 to burst out from a side where the bottom wall 12 is located, thereby improving the safety of the battery pack 100. When the cell assembly 20 swells, a swelling force acts on the elastic member 30, and the elastic member 30 exerts the swelling force on the shell 10a. Over time, the cell assembly 20 continues to swell, and after the elastic member 30 is compressed to a limit, it bursts open the bottom wall 12, buffering the pressure of the cell assembly 20 and reducing the risk of a pressure bust from the cell assembly 20.

In some embodiments, strength of the top wall 11 is greater than strength of the bottom wall 12, which further facilitates the cell assembly 20 to burst out from the side where the bottom wall 12 is located, further improving the safety of the battery pack 100.

In some embodiments, the bottom wall 12 is provided with a first fixing portion 12a, along the first direction X, a projection of the first fixing portion 12a overlaps with a projection of the elastic member 30, and the elastic member 30 is fixed to the first fixing portion 12a.

In some embodiments, the bottom wall 12 is provided with a plurality of first extension portions 121 and a plurality of first fixing portions 12a, the first extension portions 121 and the first fixing portions 12a are arranged along the third direction Z, and the first fixing portion 12a is disposed between adjacent first extension portions 121, which helps to block gaps and helps the elastic member 30 to be evenly stressed and uniformly deformed. The first direction X, the second directionY, and the third direction Z are perpendicular to each other.

In some embodiments, the top wall 11 is provided with a second fixing portion 11a, along the first direction X, a projection of the second fixing portion 11a overlaps with a projection of the elastic member 30, and the elastic member 30 is fixed to the second fixing portion 11a.

In some embodiments, fixing includes but is not limited to abutting, bonding, welding, fastening with fasteners, snap-fit connection, and so on.

In some embodiments, the top wall 11 is provided with a plurality of second extension portions 111 and a plurality of second fixing portions 11a, the second extension portions 111 and the second fixing portions 11a are arranged along the third direction Z, and the second fixing portion 11a is disposed between adjacent second extension portions 111, which helps to block gaps and helps the elastic member 30 to be evenly stressed and uniformly deformed.

In some embodiments, the second fixing portion 11a and the first fixing portion 12a are arranged along the second directionY, which helps the elastic member 30 to be evenly stressed and uniformly deformed.

In some embodiments, the shell 10a includes a first side wall 13, and the first side wall 13 connects the top wall 11 and the bottom wall 12.

In some embodiments, the first side wall 13 is provided with a first fixing member 131, and the first fixing member 131 is fixedly connected to the front cover 10b.

In some embodiments, the front cover 10b includes a third connecting wall 104b, and the third connecting wall 104b connects the first connecting wall 101b and the second connecting wall 102b. A fastener 101 passes through the third connecting wall 104b and the first fixing member 131, securing the connection between the first side wall 13 and the front cover 10b.

In some embodiments, along the second directionY, one side of the first side wall 13 is fixedly connected to the top wall 11, and another side of the first side wall 13 is directly connected to the bottom wall 12, which facilitates the elastic member 30 to burst open the bottom wall 12. Optionally, the first side wall 13 secures the connection between the front cover 10b and the top wall 11 via a fastener 101.

In some embodiments, the shell 10a includes a second side wall 14, and the second side wall 14 connects the top wall 11 and the bottom wall 12. The first side wall 13 and the second side wall 14 are arranged along the third direction Z. The first direction X, the second directionY, and the third direction Z are perpendicular to each other.

In some embodiments, the second side wall 14 is provided with a second fixing member 141, and the second fixing member 141 is fixedly connected to the front cover 10b.

In some embodiments, the front cover 10b includes a fourth connecting wall 105b, the third connecting wall 104b and the fourth connecting wall 105b are arranged along the third direction Z, and the fourth connecting wall 105b connects the first connecting wall 101b and the second connecting wall 102b. A fastener 101 passes through the fourth connecting wall 105b and the second fixing member 141, securing the connection between the second side wall 14 and the front cover 10b.

In some embodiments, along the second directionY, one side of the second side wall 14 is fixedly connected to the top wall 11, and another side of the second side wall 14 is directly connected to the bottom wall 12, which facilitates the elastic member 30 to burst open the bottom wall 12. Optionally, the second side wall 14 secures the connection between the front cover 10b and the top wall 11 via a fastener 101.

In some embodiments, the first side wall 13 is provided with a third fixing portion 13a, and the elastic member 30 is fixed to the third fixing portion 13a. Optionally, the elastic member 30 abuts against the third fixing portion 13a.

Along the first direction X, a projection of the third fixing portion 13a overlaps with a projection of the elastic member 30, and the third fixing portion 13a abuts against a side of the elastic member 30, the side of the elastic member 30 being a sied oriented away from the cell assembly 20.

In some embodiments, the second side wall 14 is provided with a fourth fixing portion 14a, and the third fixing portion 13a and the fourth fixing portion 14a are arranged along the third direction Z. The elastic member 30 is fixed to the fourth fixing portion 14a. Optionally, the elastic member 30 abuts against the fourth fixing portion 14a.

Along the first direction X, a projection of the fourth fixing portion 14a overlaps with a projection of the elastic member 30, and the fourth fixing portion 14a abuts against a side of the elastic member 30, the side of the elastic member 30 being a sied oriented away from the cell assembly 20.

The second fixing portion 11a, the first fixing portion 12a, the third fixing portion 13a, and the fourth fixing portion 14a allow two sides of the elastic member 30 along the second directionY and two sides of the elastic member 30 along the third direction Z all abut against the shell 10a, which helps the elastic member 30 to be evenly stressed and uniformly deformed.

In some embodiments, the shell 10a includes a back wall 15, where the back wall 15 connects the top wall 11, the bottom wall 12, the first side wall 13, and the second side wall 14. Along the first direction X, the cell assembly 20 is located between the elastic member 30 and the back wall 15.

In some embodiments, a stiffness of the elastic member 30 is greater than a stiffness of the back wall 15, so that when the cell assembly 20 swells, the elastic member 30 deforms before the back wall 15, providing a swelling space for the cell assembly 20.

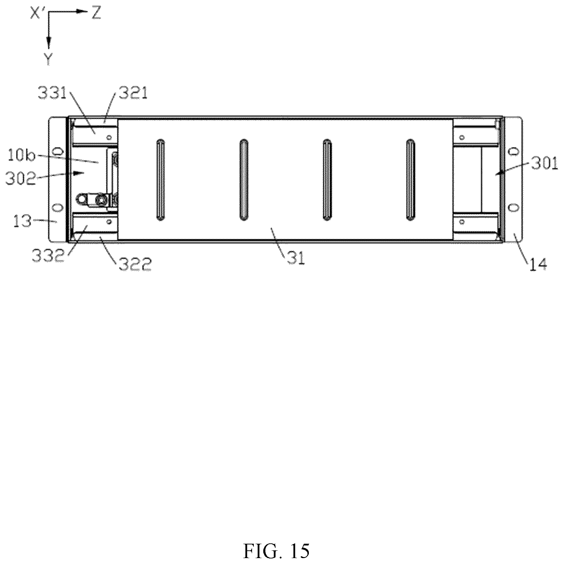

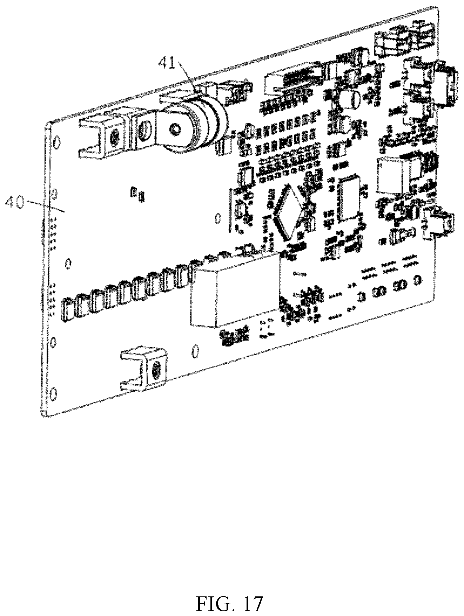

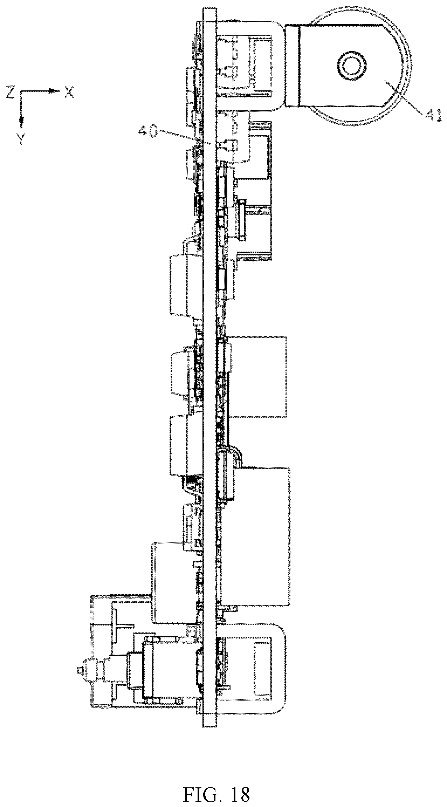

Referring to FIGs. 15 to 19, in some embodiments, the battery pack 100 includes a circuit board 40, and the circuit board 40 is disposed in the front cover 10b. The circuit board 40 is provided with a first component 41 on a side facing the elastic member 30.

In some embodiments, the first component 41 includes a fuse device.

In some embodiments, the fuse device may be a circuit breaker, for example, the circuit breaker may be a fuse or a short-circuit device with a fuse structure.

In some embodiments, the fuse device may be disposed in a power circuit of the battery pack 100. It should be understood that, optionally, the power circuit of the battery pack 100 may include a discharge circuit for discharging the battery pack 100 externally, and may also include a charging circuit for charging the battery pack 100.

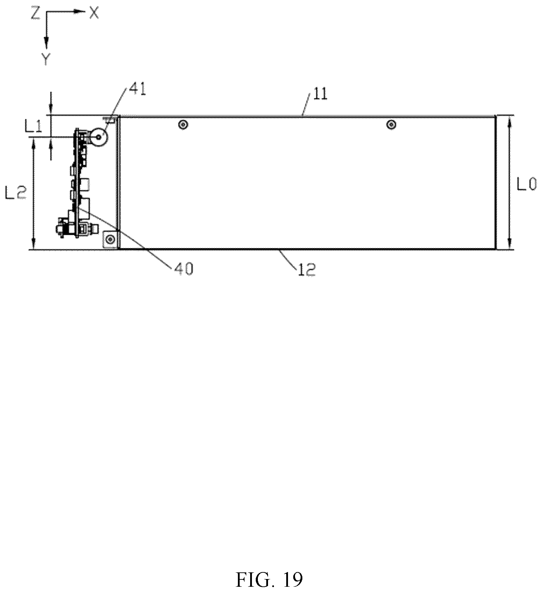

Referring to FIG. 19, in some embodiments, along the second directionY, a distance from the first component 41 to the top wall 11 is L1, and a distance from the first component 41 to the bottom wall 12 is L2, where L1 is less than L2. By disposing the first component 41 closer to the top wall 11, a risk of damage to the first component 41 is reduced when the elastic member 30 bursts open the bottom wall 12 and the cell assembly 20 bursts out of the bottom wall 12.

In some embodiments, when measuring L1 and L2, a test position on the first component 41 is a highest point of the first component 41 protruding from the circuit board 40.

In some embodiments, along the second directionY, a distance between the bottom wall 12 and the top wall 11 is L0, where L1 is less than 1/4L0, further reducing a risk of the cell assembly 20 coming into contact with the first component 41 and causing damage to the first component 41.

In some embodiments, along the first direction X, the first component 41 protrudes from the circuit board 40 more than other components.

Optionally, the circuit board 40 includes a BMS (BatteryManagementSystem) assembly. The BMS assembly includes a plurality of electronic components, and the plurality of electronic components can implement functions such as control, protection, communication, electrical quantity calculation, signal transmission, and electrical energy transmission for the cell assembly 20.

Optionally, the circuit board 40 includes a flexible printed circuit (FPC, FlexiblePrintedCircuit). Optionally, the circuit board 40 includes a printed circuit board (PCB, PrintedCircuitBoard).

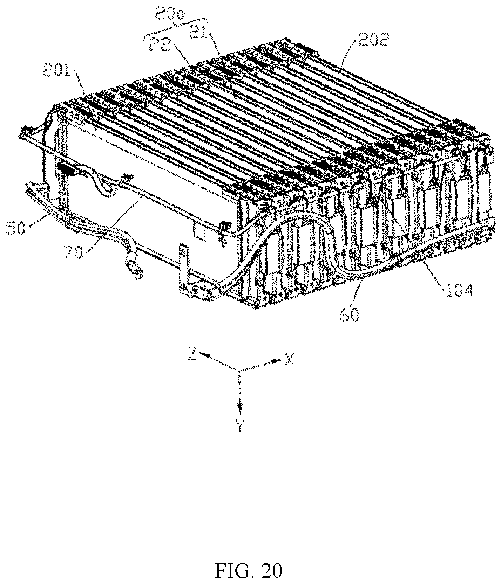

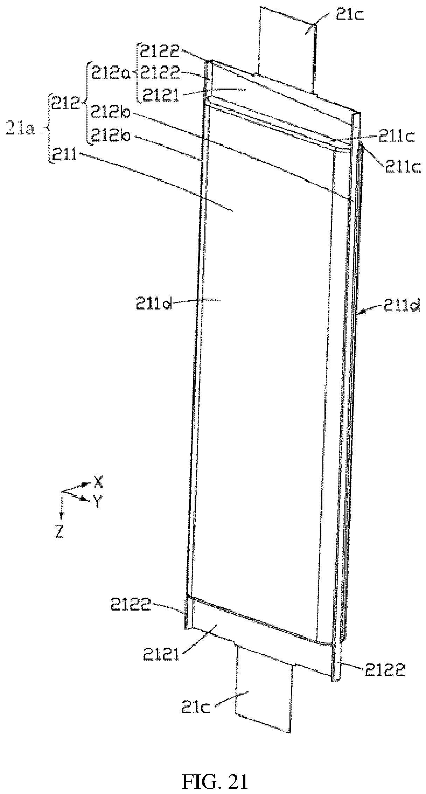

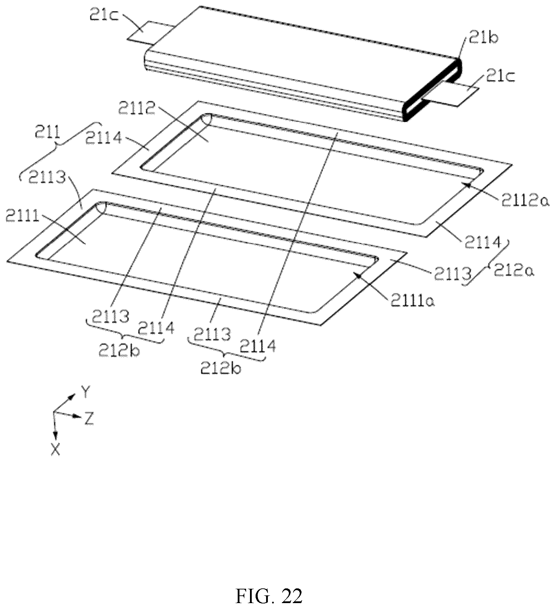

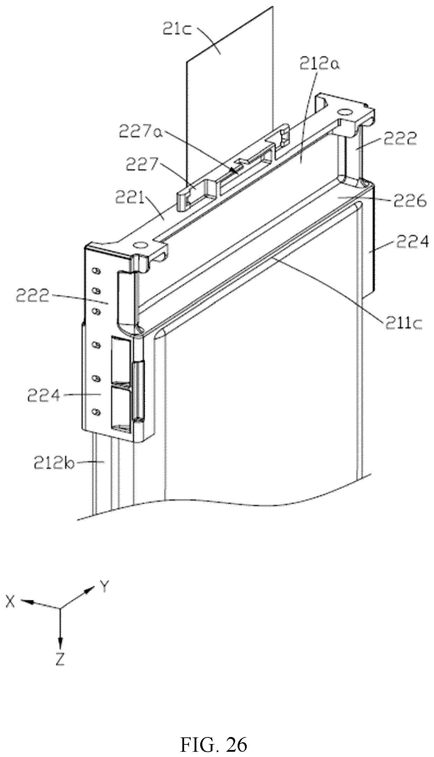

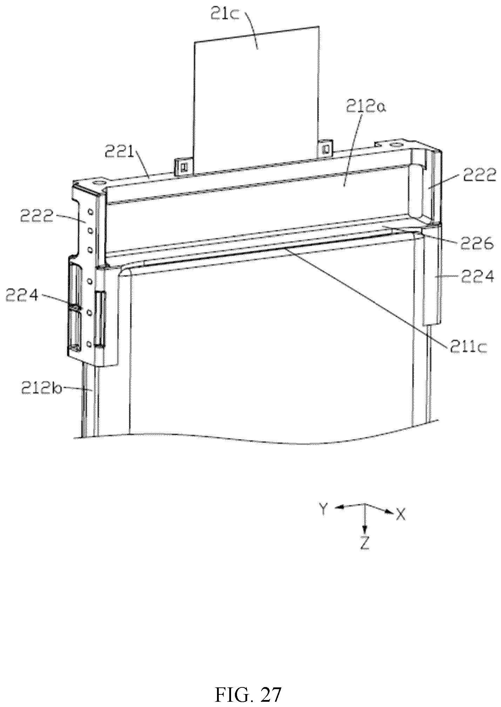

Referring to FIGs. 20 to 28, in some embodiments, the cell assembly 20 includes a plurality of cell units 20a, and the plurality of cell units 20a are stacked along the first direction X.

In some embodiments, the cell unit 20a includes a first cell unit 201 and a second cell unit 202, the first cell unit 201 and the second cell unit 202 are the outermost cell units of the cell assembly 20, where the first cell unit 201 is connected to the elastic member 30, and the second cell unit 202 is connected to the back wall 15.

In some embodiments, the cell unit 20a includes a cell 21, where the cell 21 includes a cell housing 21a, an electrode assembly 21b, and electrode terminals 21c. The cell housing 21a includes a body portion 211, and the electrode assembly 21b is located within the body portion 211. The electrode terminal 21c is connected to the electrode assembly 21b, and extends out of the cell housing 21a.

In some embodiments, the cell unit 20a is connected to the bottom wall 12, and the cell unit 20a is configured to move relative to the bottom wall 12 along a direction opposite to the first direction X when the cell 21 swells.

In some embodiments, the cell unit 20a is connected to the bottom wall 12, and the cell unit 20a is configured to move relative to the bottom wall 12 along the first direction X when the swelling of the cell 21 decreases.

In some embodiments, the battery pack 100 includes a first insulating strip 110, and the first insulating strip 110 is disposed between the bottom wall 12 and the cell assembly 20, enhancing the insulation between the cell assembly 20 and the bottom wall 12.

In some embodiments, the cell assembly 20 is connected to the first insulating strip 110, for example, the cell assembly 20 is in contact connection with the first insulating strip 110. The cell unit 20a is configured to move on the first insulating strip 110 along a direction opposite to the first direction X when the cell unit 20a swells.

In some embodiments, the cell assembly 20 is connected to the first insulating strip 110, for example, the cell assembly 20 is in contact connection with the first insulating strip 110. The cell unit 20a is configured to move on the first insulating strip 110 along the first direction X when the swelling of the cell 21 decreases.

In some embodiments, a friction coefficient between the cell unit 20a and the first insulating strip 110 is less than a friction coefficient between the cell unit 20a and the bottom wall 12, which facilitates the movement of the cell unit 20a.

In some embodiments, the cell housing 21a includes a sealing portion 212, the sealing portion 212 is connected to the body portion 211, and the electrode terminal 21c extends out of the cell housing 21a from the sealing portion 212.

In some embodiments, the body portion 211 includes a first housing 2111 and a second housing 2112, the first housing 2111 is provided with a first concave portion 2111a, and the second housing 2112 is provided with a second concave portion 2112a. The first housing 2111 is connected to the second housing 2112, forming an accommodating space. A part of the electrode assembly 21b is disposed in the first concave portion 2111a, and a part of the electrode assembly 21b is disposed in the second concave portion 2112a. A peripheral side of the first housing 2111 extends outward to form a first extension side 2113, and a peripheral side of the second housing 2112 extends outward to form a second extension side 2114. After the first housing 2111 is connected to the second housing 2112, the first extension side 2113 and the second extension side 2114 overlap and are sealed together, forming the sealing portion 212.

In some embodiments, the sealing portion 212 includes a first sealing portion 212a, and the electrode terminal 21c extends out of the cell housing 21a from the first sealing portion 212a.

In some embodiments, the sealing portion 212 includes a second sealing portion 212b, and the second sealing portion 212b is connected to the first sealing portion 212a.

In some embodiments, the first extension side 2113 and the second extension side 2114 overlap and are sealed together, forming two first sealing portions 212a and two second sealing portions 212b. The two first sealing portions 212a are arranged along the third direction Z, and the two second sealing portions 212b are arranged along the second directionY, where one first sealing portion 212a is connected to two second sealing portions 212b, and the other first sealing portion 212a is connected to two second sealing portions 212b.

In some embodiments, the cell 21 includes two electrode terminals 21c, where one electrode terminal 21c extends out of the cell housing 21a from one of the two first sealing portions 212a, and the other electrode terminal 21c extends out of the cell housing 21a from the other of the two first sealing portions 212a.

In some embodiments, the two electrode terminals 21c extend out of the cell housing 21a from a same first sealing portion 212a.

In one embodiment, adjacent body portions 211 are in contact connection, which facilitates the application of pressure to the body portion 211.

In one embodiment, there is mutual pressure between adjacent cell housings 21a, keeping a plurality of cell units 20a in a pressurized state, which helps to improve the service life of the cell units 20a.

In some embodiments, the first sealing portion 212a includes a first sealing connection portion 2121 and two first sealing bent portions 2122, and the first sealing connection portion 2121 connects the two first sealing bent portions 2122. The two first sealing bent portions 2122 are oppositely arranged along the second directionY. The electrode terminal 21c extends out of the cell housing 21a from the first sealing connection portion 2121.

In some embodiments, the cell housing 21a includes an aluminum-plastic film.

In some embodiments, the cell 21 includes but is not limited to a pouch cell, a prismatic cell, and a cylindrical cell.

In some embodiments, each cell unit 20a further includes a bracket 22, and the bracket 22 covers at least a part of the cell housing 21a.

In some embodiments, the bracket 22 is configured to move relative to the shell 10a along a direction opposite to the first direction X when the cell 21 swells.

In some embodiments, the bracket 22 is configured to move relative to the shell 10a along the first direction X when the swelling of the cell 21 decreases.

In some embodiments, the bracket 22 is connected to the bottom wall 12, and the bracket 22 is configured to move relative to the bottom wall 12 along the direction opposite to the first direction X when the cell 21 swells.

In some embodiments, the bracket 22 is connected to the bottom wall 12, and the bracket 22 is configured to move relative to the bottom wall 12 along the first direction X when the swelling of the cell 21 decreases.

In some embodiments, the bracket 22 is in contact connection with the first insulating strip 110, and the bracket 22 is configured to move on the first insulating strip 110 along the direction opposite to the first direction X when the cell 21 swells.

In some embodiments, the bracket 22 is in contact connection with the first insulating strip 110, and the bracket 22 is configured to move on the first insulating strip 110 along the first direction X when the swelling of the cell 21 decreases.

In some embodiments, the bracket 22 is integrally formed with the cell 21, which can improve the strength of connection between the bracket 22 and the cell 21. Here, "integrally formed" means that the bracket 22 and the cell 21 are directly fixed. The method of integrally forming includes but is not limited to a potting process and an injection molding process.

In some embodiments, through the potting process, an insulating material is disposed around the cell 21, and after the insulating material is cured, a bracket 22 is formed, where the bracket 22 and the cell 21 are bonded and fixed. For example, a cell 21 is placed into a mold, and an insulating material is potted into the mold. After the insulating material is cured to form a bracket 22 and after the bracket 22 is bonded and fixed to the cell 21, the bracket 22 and the cell 21 are taken out of the mold.

In some embodiments, the insulating material includes but is not limited to potting adhesive and foam adhesive.

In some embodiments, the injection molding process includes placing a cell 21 into a mold, heating and melting an insulating material with injection molding equipment, and allowing the molten insulating material to flow into the mold. After the insulating material solidifies and forms a bracket 22, and after the bracket 22 is bonded and fixed to the cell 21, the bracket 22 and the cell 21 are taken out of the mold. Optionally, the insulating material includes polyamide.

In some embodiments, the bracket 22 is an insulating bracket, which can reduce a risk of a short circuit between the bracket 22 and the cell 21.

In some embodiments, the bracket 22 includes a first bracket 22a, and the first bracket 22a covers at least a part of the sealing portion 212.

In some embodiments, the first bracket 22a includes at least one first side portion 222, and each first side portion 222 covers one first sealing bent portion 2122. Through the covering of a part of the first sealing portion 212a with the first bracket 22a, the protection of the first sealing portion 212a is increased.

In some embodiments, the first side portion 222 is connected to the bottom wall 12, and the first side portion 222 is configured to move relative to the bottom wall 12 along the direction opposite to the first direction X when the cell 21 swells.

In some embodiments, the first side portion 222 is connected to the bottom wall 12, and the first side portion 222 is configured to move relative to the bottom wall 12 along the first direction X when the swelling of the cell 21 decreases.

In some embodiments, the first side portion 222 is connected to the first insulating strip 110, and the first side portion 222 is configured to move on the first insulating strip 110 along the direction opposite to the first direction X when the cell 21 swells. For example, the first side portion 222 is in contact connection with the first insulating strip 110.

In some embodiments, the first side portion 222 is connected to the first insulating strip 110, and the first side portion 222 is configured to move on the first insulating strip 110 along the first direction X when the swelling of the cell 21 decreases. For example, the first side portion 222 is in contact connection with the first insulating strip 110.

In some embodiments, the first bracket 22a includes two first side portions 222, and the first side portions 222 are arranged along the second directionY. One of the first side portions 222 is connected to the first insulating strip 110.

When the cell 21 swells, the first sealing portion 212a can move relative to the first insulating strip 110 through the first side portion 222, and the friction between the first sealing portion 212a and the first insulating strip 110 during movement of the first sealing portion 212a can be reduced through the first side portion 222, facilitating movement and protecting the first sealing portion 212a, thereby reducing a risk of damage to the first sealing portion 212a affecting the use of the battery pack 100.

In some embodiments, the first bracket 22a includes a first portion 221, and the first portion 221 covers at least a part of the first sealing connection portion 2121, increasing the protection of the first sealing portion 212a.

In some embodiments, along the second directionY, one end of the first portion 221 is connected to the first side portion 222, and another end of the first portion 221 is connected to another first side portion 222, which can increase the structural strength of the first bracket 22a and is beneficial for the protection of the first sealing portion 212a.

In some embodiments, the first bracket 22a includes at least one first side extension portion 224, the first side extension portion 224 covers a part of the body portion 211, and the first side extension portion 224 can protect the body portion 211 and can increase the strength of connection between the first bracket 22a and the cell 21.

In some embodiments, the first bracket 22a includes at least one first side extension portion 224, the first side extension portion 224 covers a part of the body portion 211 and one of the second sealing portions 212b, and the first side extension portion 224 and the second sealing portion 212b are located on a same side of the body portion 211. The first side extension portion 224 can protect the body portion 211 and the second sealing portion 212b and can increase the strength of connection between the first bracket 22a and the cell 21.

In some embodiments, the first bracket 22a includes two first side extension portions 224, and the two first side extension portions 224 are arranged along the second directionY. One of the first side extension portion 224 covers a part of the body portion 211 and one of the second sealing portions 212b, and the first side extension portion 224 and the second sealing portion 212b are located on a same side of the body portion 211. Another first side extension portion 224 covers a part of the body portion 211 and another second sealing portion 212b, and the first side extension portion 224 and the second sealing portion 212b are located on a same side of the body portion 211. The first side extension portion 224 can protect the body portion 211 and the second sealing portion 212b and can increase the strength of connection between the first bracket 22a and the cell 21.

In some embodiments, the first side extension portion 224 is connected to the bottom wall 12, and the first side extension portion 224 is configured to move relative to the bottom wall 12 along the direction opposite to the first direction X when the cell 21 swells.

In some embodiments, the first side extension portion 224 is connected to the bottom wall 12, and the first side extension portion 224 is configured to move relative to the bottom wall 12 along the first direction X when the swelling of the cell 21 decreases.

In some embodiments, the first side extension portion 224 is connected to the first insulating strip 110, and the first side extension portion 224 is configured to move on the first insulating strip 110 along the direction opposite to the first direction X when the cell 21 swells. For example, the first side extension portion 224 is in contact connection with the first insulating strip 110.

In some embodiments, the first side extension portion 224 is connected to the first insulating strip 110, and the first side extension portion 224 is configured to move on the first insulating strip 110 along the first direction X when the swelling of the cell 21 decreases. For example, the first side extension portion 224 is in contact connection with the first insulating strip 110.

When the cell 21 swells, the body portion 211 can move on the first insulating strip 110 through the first side extension portion 224, and the friction between the body portion 211 and the first insulating strip 110 during movement of the body portion 211 can be reduced through the first side extension portion 224, facilitating the movement and protecting the body portion 211, thereby reducing a risk of damage to the body portion 211 affecting the use of the battery pack 100.

In some embodiments, the first side extension portion 224 extends from the first side portion 222, which helps to enhance the strength of connection between the first side extension portion 224 and the first side portion 222.

In some embodiments, the body portion 211 includes a first wall 211c, and the first sealing portion 212a is connected to the first wall 211c.

In some embodiments, the first bracket 22a includes a second portion 226, and the second portion 226 covers a part of the first wall 211c, protecting the body portion 211. One end of the first portion 221 is connected to one of the first side portions 222, and another end is connected to another first side portion 222; one end of the second portion 226 is connected to one of the first side portions 222, and another end is connected to another first side portion 222, which can further increase the structural strength of the first bracket 22a, and further benefit the protection of the first sealing portion 212a.

In some embodiments, the first bracket 22a includes two second portions 226 and two first walls 211c.

In some embodiments, the first bracket 22a includes a protrusion portion 227, and the protrusion portion 227 protrudes from the first portion 221 along the direction opposite to the second directionY.

In some embodiments, the battery pack 100 includes a detection member (not shown), and the protrusion portion 227 is provided with an accommodating groove 227a on a side, the side the protrusion portion 227 being a side oriented away from the electrode terminal 21. The detection member is accommodated in the accommodating groove 227a. The detection member is configured to detect a temperature of the cell 21. Optionally, the detection member is configured to detect the temperature of the electrode terminal 21c, which helps to improve the accuracy of detecting the temperature of the cell 21.

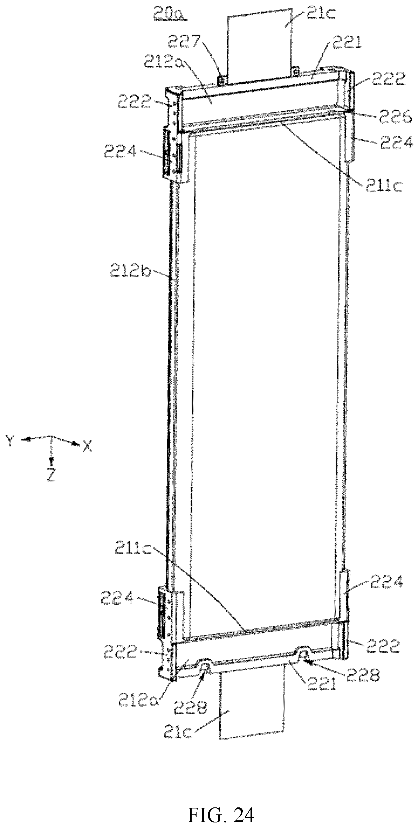

Referring to FIG. 24, when viewed along the direction opposite to the first direction X, the electrode terminal 21c is not blocked by the protrusion portion 227. In some embodiments, the body portion 211 includes two second walls 211d, and the two second walls 211d are arranged along the first direction X. The first wall 211c connects the second wall 211d and the first sealing portion 212a.

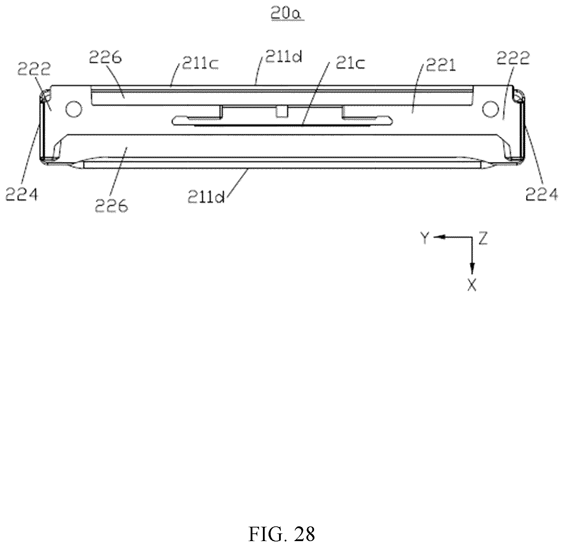

In some embodiments, referring to FIG. 28, when viewed along the third direction Z, in the first direction X, the second portion 226 does not extend beyond the second wall 211d, body portions 211 of adjacent cells 21 are in contact connection, and adjacent cells 21 apply pressure to each other through the body portions 211.

In some embodiments, referring to FIG. 28, when viewed along the third direction Z, in the first direction X, the second portion 226 is located between two second walls 211d. When the body portions 211 of adjacent cells 21 apply pressure to each other, it can reduce the stress on the first sealing portion 212a and enhance the protection of the first sealing portion 212a.

In some embodiments, referring to FIG. 28, when viewed along the third direction Z, in the first direction X, the first side portion 222 is located between two second walls 211d. When the body portions 211 of adjacent cells 21 apply pressure to each other, it can reduce the stress on the first sealing portion 212a and enhance the protection of the first sealing portion 212a.

In some embodiments, when viewed along the third direction Z, in the first direction X, the first side extension portion 224 is located between two second walls 211d. When the body portions 211 of adjacent cells 21 apply pressure to each other, it can reduce the stress on the first sealing portion 212a and enhance the protection of the first sealing portion 212a.

In some embodiments, the bracket 22 includes a second bracket 22b, and the second bracket 22b is connected to another first sealing portion 212a.

In some embodiments, the first bracket 22a and the second bracket 22b have the same structure.

In some embodiments, the first bracket 22a and the second bracket 22b are similar, so the repetitive description of the same or similar structures of the first bracket in some previous embodiments will be omitted, and the following will focus on the structures different from the structures in some previous embodiments.

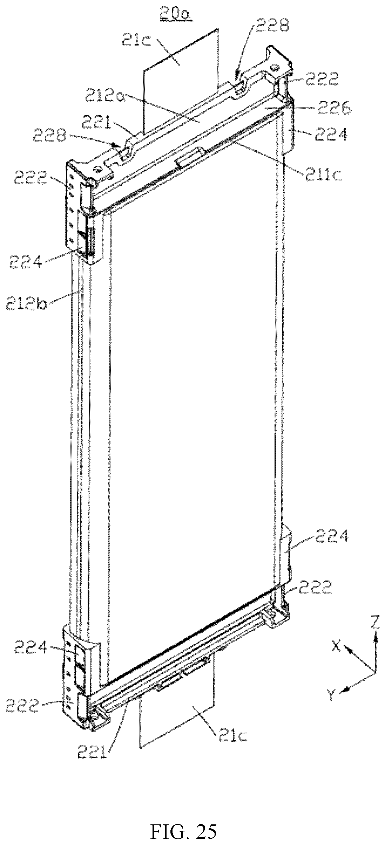

Referring to FIG. 24 and FIG. 25, in some embodiments, the second bracket 22b is provided with a notch 228, and a part of the first sealing connection portion 2121 of another first sealing portion 212a is located within the notch 228. When the cell 21 swells, the internal pressure of the cell 21 can be discharged through the first sealing connection portion 2121 within the notch 228, which is conducive to pressure relief and improves the safety of the cell unit 20a.

In some embodiments, the notch 228 and the detection member are disposed on different brackets, reducing the risk of damage to the detection member during pressure relief.

In some embodiments, the first bracket 22a may be provided with a notch 228 as shown in the second bracket 22b.

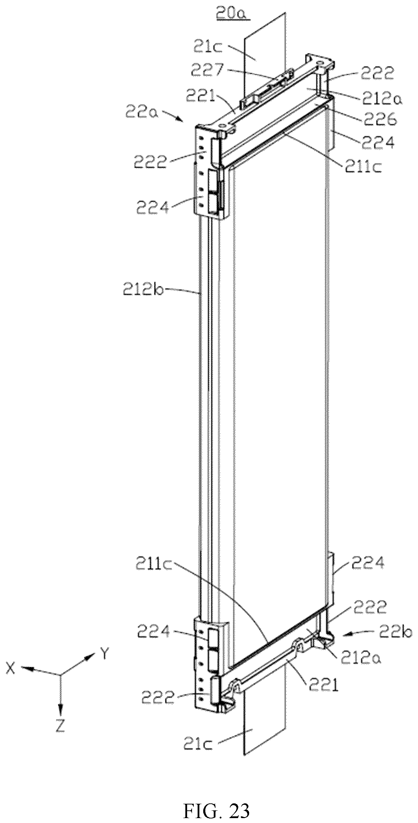

Referring to FIG. 25, in some embodiments, the second bracket 22b is not provided with the protrusion portion 227 as shown in FIG. 23.

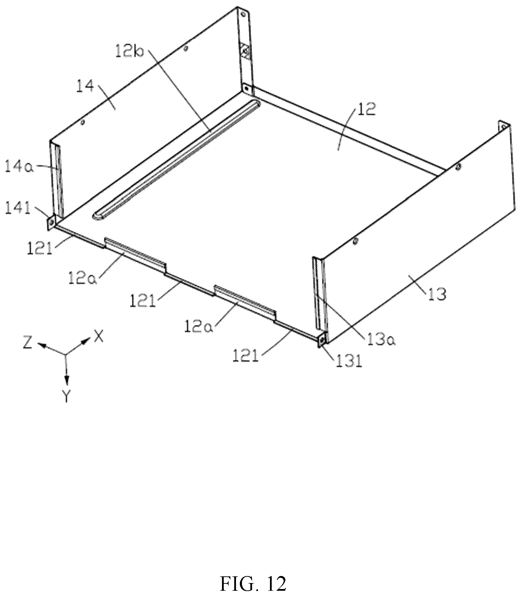

Referring to FIG. 2 and FIG. 12, in some embodiments, the bottom wall 12 is provided with two first limiting portions 12b, and the two first limiting portions 12b are arranged at an interval along the third direction Z, with each first limiting portion 12b extending along the first direction X. The body portion 211 is disposed between the two first limiting portions 12b. The movement of the cell assembly 20 is guided by the two first limiting portions 12b. Optionally, the two first limiting portions 12b guide the movement of the cell assembly 20 in the direction opposite to the first direction X. Optionally, the first limiting portion 12b is formed by protrusion of the bottom wall 12 toward the top wall 11.

In some embodiments, the body portion 211 of each cell unit 20a is disposed between the two first limiting portions 12b.

Referring to FIG. 2 and FIG. 12, in some embodiments, the top wall 11 is provided with two second limiting portions 11b, and the two second limiting portions 11b are arranged at an interval along the third direction Z, with each second limiting portion 11b extending along the first direction X. The body portion 211 is disposed between the two second limiting portions 11b. The movement of the cell assembly 20 is further guided by the two second limiting portions 11b. Optionally, the two second limiting portions 11b guide the movement, in the direction opposite to the first direction X, of the cell assembly 20. Optionally, the second limiting portions 11b are formed by the protrusion of the top wall 11 toward the bottom wall 12.

In some embodiments, the body portion 211 of each cell unit 20a is disposed between the two second limiting portions 11b.

In some embodiments, the bottom wall 12 is provided with two first limiting portions 12b, and the top wall 11 is provided with two second limiting portions 11b.

Referring to FIGs. 2 to 15, in some embodiments, the elastic member 30 includes a base portion 31, a buffer portion 32, and a connection portion 33, where the base portion 31 is connected to the cell assembly 20, and the buffer portion 32 is connected to the base portion 31 and the connection portion 33.

In some embodiments, the connection portion 33 is fixed to the shell 10a.

In some embodiments, along the first direction X, the cell assembly 20 is located between the base portion 31 and the back wall 15, the back wall 15 is connected to the cell assembly 20, the base portion 31 is connected to the cell assembly 20, and the base portion 31 is configured to apply pressure to the cell assembly 20.

In some embodiments, the base portion 31 is connected to the first cell unit 201. Optionally, the base portion 31 is in contact connection with the first cell unit 201. Optionally, the base portion 31 and the first cell unit 201 can provide connections for other components.

In some embodiments, the battery pack 100 includes a first buffer member 120, and the first buffer member 120 is disposed between the base portion 31 and the first cell unit 201. Optionally, the first buffer member 120 includes foam.

In some embodiments, hardness of the first buffer member 120 is less than hardness of the base portion 31, reducing damage to the first cell unit 201 by the base portion 31.

In some embodiments, the back wall 15 is connected to the second cell unit 202.

In some embodiments, the battery pack 100 includes a second buffer member 130, and the second buffer member 130 is disposed between the second cell unit 202 and the back wall 15. Optionally, the second buffer member 130 includes foam.

In some embodiments, hardness of the second buffer member 130 is less than hardness of the back wall 15, reducing damage to the second cell unit 202 by the back wall 15.

In some embodiments, along the first direction X, a projection of the body portion 211 is located within a projection of the base portion 31, which can increase the interaction area between the base portion 31 and the body portion 211, facilitating the application of pressure from the base portion 31 to the body portion 211.

In some embodiments, the foam material includes ethylene-vinyl acetate (EVA) copolymer.

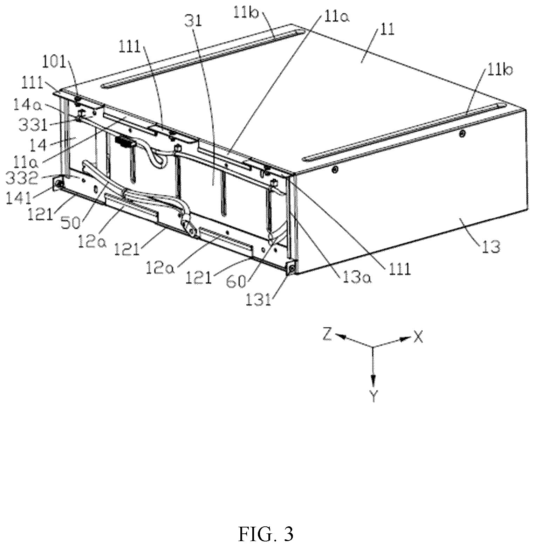

Referring to FIG. 3, FIG. 4, FIG. 15, and FIG. 20, in some embodiments, the battery pack 100 includes a first conductive member 50. Along the third direction Z, there is a first gap 301 provided between the base portion 31 and the shell 10a. One end of the first conductive member 50 is connected to the cell assembly 20, and another end passes through the first gap 301.

In some embodiments, along the third direction Z, there is the first gap 301 provided between the base portion 31 and the second side wall 14.

In some embodiments, one end of the first conductive member 50 is connected to the first cell unit 201.

In some embodiments, the first conductive member 50 is fixed to the elastic member 30.

In some embodiments, the first conductive member 50 is configured to move with the elastic member 30. Under conditions such as cell unit swelling, vibration, or drops, the movement of the first conductive member 50 with the elastic member 30 can reduce the pulling force on the first conductive member 50, thereby lowering the risk of the first conductive member 50 being pulled apart and enhancing the safety of the battery pack 100. Optionally, the first conductive member 50 includes a wire harness.

In some embodiments, the first conductive member 50 is configured to transmit the power of the cell assembly 20. The first conductive member 50 can transmit the power of the cell assembly 20. During the discharging of the battery pack 100, the electrical energy of the cell assembly 20 can be transmitted to the load of the electric device through the first conductive member 50, providing power to the load of the electric device. During the charging of the battery pack 100, the external electrical energy can be transmitted to the cell assembly 20 through the first conductive member 50, charging the cell assembly 20.

In some embodiments, the battery pack 100 includes a second conductive member 60. Along the third direction Z, there is a second gap 302 provided between the base portion 31 and the shell 10a. One end of the second conductive member 60 is connected to the cell assembly 20, and another end passes through the second gap 302.

In some embodiments, along the third direction Z, there is the second gap 302 between the base portion 31 and the first side wall 13.

In some embodiments, one end of the second conductive member 60 is connected to the second cell unit 202.

In some embodiments, the second conductive member 60 and the elastic member 30 are separately disposed. Under conditions such as cell unit swelling, vibration, or drops, the separation of the second conductive member 60 and the elastic member 30 helps reduce the pulling force on the second conductive member 60, lower the risk of the second conductive member 60 being pulled off, and improve the safety of the battery pack 100. Optionally, the second conductive member 60 includes a wire harness.

In some embodiments, the second conductive member 60 is configured to transmit the power of the cell assembly 20. The second conductive member 60 can transmit the power of the cell assembly 20. During the discharging of the battery pack, the electrical energy of the cell assembly 20 can be transmitted to the load of the electric device through the second conductive member 60, providing power to the load of the electric device. During the charging of the battery pack, the external electrical energy can be transmitted to the cell assembly 20 through the second conductive member 60, charging the cell assembly 20.

In some embodiments, one of the first conductive member 50 and the second conductive member 60 is connected to the main positive terminal of the cell assembly 20, and the other is connected to the main negative terminal of the cell assembly 20.

In some embodiments, the buffer portion 32 is configured to provide a swelling space for the cell assembly 20.

In some embodiments, the buffer portion 32 includes a first buffer portion 321, the first buffer portion 321 is connected to the base portion 31, the first buffer portion 321 can act on the cell assembly 20 through the base portion 31, and the first buffer portion 321 can provide a swelling space for the cell assembly 20.

In some embodiments, the buffer portion 32 includes a second buffer portion 322, and along the second directionY, the first buffer portion 321 and the second buffer portion 322 are oppositely arranged. The first buffer portion 321 is connected to one side of the base portion 31, and the second buffer portion 322 is connected to another side of the base portion 31. The second buffer portion 322 can act on the cell assembly 20 through the base portion 31, and the second buffer portion 322 can provide a swelling space for the cell assembly 20.

Referring to FIG. 3, in some embodiments, the connection portion 33 includes a first connection portion 331, and the first connection portion 331 is connected to the first buffer portion 321.

In some embodiments, along the first direction X, a projection of the first connection portion 331 overlaps with a projection of the second fixing portion 11a, and the first connection portion 331 is fixed to the second fixing portion 11a, transferring the force received by the buffer portion 32 to the shell 10a.

In some embodiments, the first connection portion 331 is fixed to the third fixing portion 13a, facilitating the transfer of the force received by the buffer portion 32 to the shell 10a. Optionally, the first connection portion 331 abuts against the third fixing portion 13a.

In some embodiments, the first connection portion 331 is fixed to the fourth fixing portion 14a, facilitating the transfer of the force received by the buffer portion 32 to the shell 10a. Optionally, the first connection portion 331 abuts against the fourth fixing portion 14a.

Referring to FIG. 3, in some embodiments, the connection portion 33 includes a second connection portion 332, and the first connection portion 331 and the second connection portion 332 are oppositely arranged along the second directionY. The second connection portion 332 is connected to the second buffer portion 322.

In some embodiments, along the first direction X, the projection of the first fixing portion 12a overlaps with a projection of the second connection portion 332, and the second connection portion 332 is fixed to the first fixing portion 12a, transferring the force received by the buffer portion 32 to the shell 10a.

In some embodiments, the second connection portion 332 is fixed to the third fixing portion 13a, facilitating the transfer of the force received by the buffer portion 32 to the shell 10a. Optionally, the second connection portion 332 abuts against the third fixing portion 13a.

In some embodiments, the second connection portion 332 is fixed to the fourth fixing portion 14a, facilitating the transfer of the force received by the buffer portion 32 to the shell 10a. Optionally, the second connection portion 332 abuts against the fourth fixing portion 14a.

In this application, the first connection portion 331 is fixed to the second fixing portion 11a, the third fixing portion 13a, and the fourth fixing portion 14a, and the second connection portion 332 is connected to the first fixing portion 12a, the third fixing portion 13a, and the fourth fixing portion 14a, which helps the elastic member 30 to be evenly stressed and uniformly deformed.

In some embodiments, strength of the top wall 11, the bottom wall 12, the first side wall 13, and the second side wall 14 is greater than strength of the elastic member 30, reducing the risk of deformation of the top wall 11, the bottom wall 12, the first side wall 13, and the second side wall 14 due to the force received by the buffer portion 32.

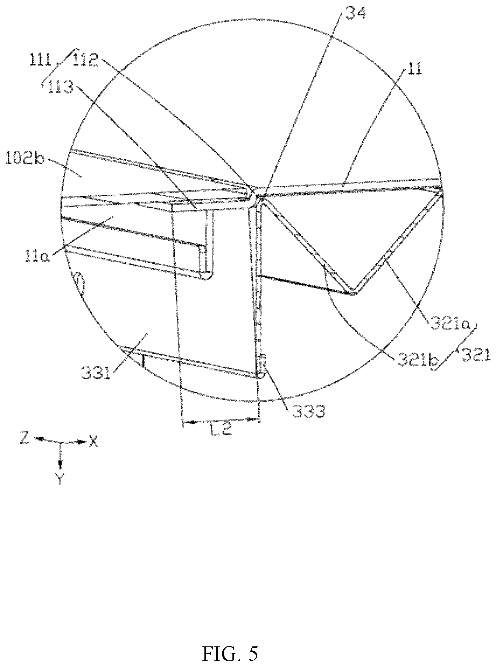

Referring to FIG. 5, FIG. 6, and FIG. 8, in some embodiments, the first buffer portion 321 includes a first segment 321a and a second segment 321b, the first segment 321a is connected to the base portion 31, and the second segment 321b is connected to the first segment 321a and the first connection portion 331.

In some embodiments, an angle formed by the first segment 321a and the base portion 31 is the same as an angle formed by the second segment 321b and the first connection portion 331, which helps the elastic member 30 to be evenly stressed and uniformly deformed.

In some embodiments, the second buffer portion 322 includes a third segment 322a and a fourth segment 322b. The third segment 322a is connected to the base portion 31, and the fourth segment 322b is connected to the third segment 322a and the second connection portion 332.

In some embodiments, an angle formed by the third segment 322a and the base portion 31 is the same as an angle formed by the fourth segment 322b and the second connection portion 332, which helps the elastic member 30 to be evenly stressed and uniformly deformed.

In some embodiments, the connection portion 33 is provided with a folded edge 333, where the folded edge 333 is formed by folding the connection portion 33 on one side away from the buffer portion 32 in the second directionY. along the first direction X, the folded edge is located between the connection portion 33 and the base portion 31. The folded edge 333 can reduce a risk of the connection portion 33 cutting through the wire harness.

In some embodiments, along the first direction X, a projection of the folded edge 333 spaced apart froma projection of the buffer portion 32, reducing the impact on a deformation region of the buffer portion 32.

In some embodiments, the elastic member 30 includes a third bent portion 34. The third bent portion 34 abuts against the second bent portion 112, which helps increase the strength of connection between the elastic member 30 and the shell 10a, and facilitates the pressure of the elastic member 30 to act on the top wall 11, moving the top wall 11 closer to the second connecting wall 102b, thereby reducing the gap between the top wall 11 and the second connecting wall 102b.

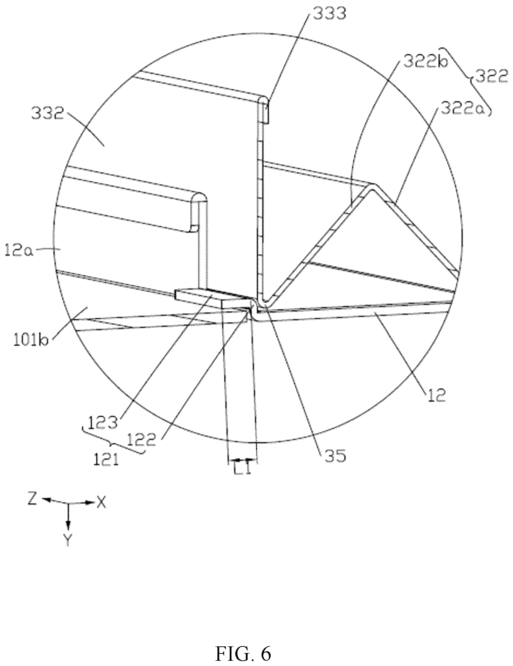

Referring to FIG. 5 and FIG. 6, in some embodiments, the elastic member 30 includes a fourth bent portion 35. The fourth bent portion 35 abuts against the first bent portion 122, which helps increase the strength of connection between the elastic member 30 and the shell 10a, and facilitates the pressure of the elastic member 30 to act on the bottom wall 12, moving the bottom wall 12 closer to the first connecting wall 101b, thereby reducing the gap between the bottom wall 12 and the first connecting wall 101b.

In some embodiments, the battery pack 100 includes a first connecting end 102 and a second connecting end 103, and the first connecting end 102 and the second connecting end 103 are connected to the front cover 10b. One of the first connecting end 102 and the second connecting end 103 is connected to the circuit board 40, and the other is connected to the first conductive member 50. The first connecting end 102 and the second connecting end 103 protrude from a side of the front cover 10b, the side of the front cover 10b being a sied oriented away from the cell assembly 20, for connecting external devices.

Referring to FIG. 3 and FIG. 20, in some embodiments, the battery pack 100 includes a sampling member 70, the sampling member 70 is connected to each cell 21, and the sampling member 70 is connected to the circuit board 40 to transmit the collected electrical signals of the cell 21 to the circuit board 40. Optionally, the electrode terminals 21c of adjacent cells 21 are stacked, and the sampling member 70 is connected to at least one of the stacked electrode terminals 21c. Optionally, the electrical signals include information such as current, voltage, resistance, and temperature. The sampling member 70 is connected to the electrode terminals 21c by welding, where the welding includes but is not limited to laser welding and ultrasonic welding.

In some embodiments, the battery pack 100 includes a wire 104, and the detection member is connected to the sampling member 70 through the wire 104.

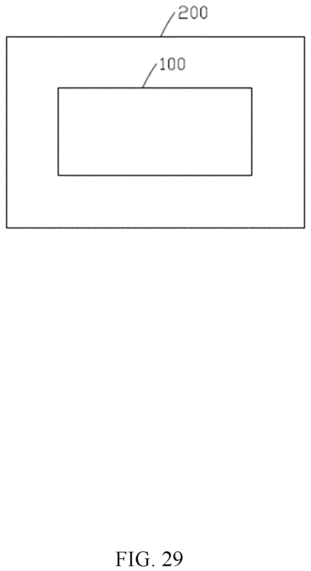

Referring to FIG. 29, this application further provides an electric device 200 that uses at least one of the foregoing battery packs 100. In an embodiment, the electric device 200 in this application may be but is not limited to an electronic device, a drone, a backup power source, an electric vehicle, an electric motorcycle, an electric motor bicycle, an electric tool, and a large household battery pack.

Those of ordinary skill in the art should appreciate that some foregoing embodiments are for description of this application only but not for limiting this application. Appropriate modifications and variations made to some foregoing embodiments without departing from scope of this application all fall within the scope of this application.

## Claims

1. A battery pack (100), comprising:
a cell assembly (20);
a shell (10a), the cell assembly (20) is disposed in the shell (10a);
a front cover (10b), the front cover (10b) is connected to the shell (10a); and
an elastic member (30), the elastic member (30) and the cell assembly (20) are arranged along a first direction (X); along the first direction (X), one side of the elastic member (30) is connected to the shell (10a), and another side of the elastic member (30) is connected to the cell assembly (20);
the shell (10a) comprises a bottom wall (12), and the bottom wall (12) supports the cell assembly (20); and
the bottom wall (12) is provided with a first extension portion (121), the front cover (10b) is provided with a first connecting wall (101b), the first extension portion (121) is connected to the first connecting wall (101b), and the elastic member (30) abuts against the first extension portion (121).

2. The battery pack (100) according to claim 1, wherein the first extension portion (121) comprises a first extension connection portion (123) and a first bent portion (122), the first extension connection portion (123) is connected to the first connecting wall (101b), and the elastic member (30) abuts against the first bent portion (122).

3. The battery pack (100) according to claim 2, wherein the shell (10a) comprises a top wall (11), the top wall (11) and the bottom wall (12) are arranged opposite to each other along a second direction (Y), the top wall (11) is provided with a second extension portion (111), and the elastic member (30) abuts against the second extension portion (111), the first direction (X) is perpendicular to the second direction (Y); and
the front cover (10b) is provided with a second connecting wall (102b), and the second extension portion (111) is connected to the second connecting wall (102b).

4. The battery pack (100) according to claim 3, wherein the second extension portion (111) comprises a second extension connection portion (113) and a second bent portion (112), the second extension connection portion (113) is connected to the second connecting wall (102b), and the elastic member (30) abuts against the second bent portion (112).

5. The battery pack (100) according to claim 4, wherein the elastic member (30) comprises a base portion (31), a buffer portion (32), and a connection portion (33); the base portion (31) is connected to the cell assembly (20), and the buffer portion (32) connects the connection portion (33) to the base portion (31); and
the connection portion (33) is fixed to the shell (10a).

6. The battery pack (100) according to claim 5, wherein the buffer portion (32) comprises a first buffer portion (321), and the first buffer portion (321) is connected to one side of the base portion (31);
or, the buffer portion (32) comprises a first buffer portion (321) and a second buffer portion (322); along the second direction (Y), the first buffer portion (321) and the second buffer portion (322) are disposed opposite to each other, the first buffer portion (321) is connected to one side of the base portion (31), and the second buffer portion (322) is connected to another side of the base portion (31).

7. The battery pack (100) according to claim 5 or 6, wherein the connection portion (33) comprises a first connection portion (331), the elastic member (30) comprises a third bent portion (34), and the third bent portion (34) abuts against the second bent portion (112).

8. The battery pack (100) according to claim 7, wherein the connection portion (33) comprises a second connection portion (332), and the first connection portion (331) and the second connection portion (332) are disposed opposite to each other along the second direction (Y); and
the elastic member (30) comprises a fourth bent portion (35), and the fourth bent portion (35) abuts against the first bent portion (122).

9. The battery pack (100) according to claim 8, wherein the bottom wall (12) is provided with a first fixing portion (12a), the second connection portion (332) is fixed to the first fixing portion (12a); and along the first direction (X), a projection of the first fixing portion (12a) overlaps with a projection of the second connection portion (332); and/or
the top wall (11) is provided with a second fixing portion (11a), the first connection portion (331) is fixed to the second fixing portion (lla); and along the first direction (X), a projection of the second fixing portion (11a) overlaps with a projection of the first connection portion (331).

10. The battery pack (100) according to claim 8 or 9, wherein the shell (10a) comprises a first side wall (13) and a second side wall (14), the first side wall (13) and the second side wall (14) are arranged opposite to each other along a third direction (Z), the first side wall (13) is fixedly connected to the front cover (10b), and the second side wall (14) is fixedly connected to the front cover (10b); the first direction (X), the second direction (Y), and the third direction (Z) is perpendicular to each other; and
the first side wall (13) is provided with a third fixing portion (13a), the first connection portion (331) and the second connection portion (332) are fixed to the third fixing portion (13a); and/or, the second side wall (14) is provided with a fourth fixing portion (14a), the first connection portion (331) and the second connection portion (332) are fixed to the fourth fixing portion (14a).

11. The battery pack (100) according to claim 10, wherein the first extension portion (121) and the first fixing portion (12a) are arranged along the third direction (Z), and the first fixing portion (12a) is disposed between adjacent first extension portions (121); and/or
the second extension portion (111) and the second fixing portion (11a) are arranged along the third direction (Z), and the second fixing portion (11a) is disposed between adjacent second extension portions (111).

12. The battery pack (100) according to any one of claims 3 to 11, wherein the first extension portion (121) and the second extension portion (111) are located in the front cover (10b).

13. The battery pack (100) according to any one of claims 1 to 12, wherein the shell (10a) comprises a back wall (15), the back wall (15) connects the top wall (11) and the bottom wall (12); along the first direction (X), the cell assembly (20) is located between the elastic member (30) and the back wall (15), and a stiffness of the elastic member (30) is less than a stiffness of the back wall (15).

14. The battery pack (100) according to any one of claims 1 to 13, wherein the battery pack comprises a first conductive member (50); the first conductive member (50) is configured to move with the elastic member (30);
along the second direction (Y), a first gap (301) is provided between the base portion (31) and the shell (10a); one end of the first conductive member (50) is connected to the cell assembly (20), and another end of the first conductive member passes through the first gap (301).

15. An electric device, comprising the battery pack (100) according to any one of claims 1 to 14.
